# EUROPEAN PATENT APPLICATION

(11) **EP 4 727 261 A1**
(43) Date of publication of application: **15.04.2026**
(21) Application number: 23961568.5
(22) Date of filing: 11.12.2023
(51) Int. Cl.: H05B 47/11, H05B 47/19, H05B 47/16, H05B 47/17, H04W 4/80

(54) **LIGHTING DEVICE AND LIGHTING DEVICE CONTROL SYSTEM**

(71) Applicant: Maltani Corp., Seoul 06196 (KR)
(72) Inventor: RHEE, Seyong, Seoul 06585 (KR); RHEE, Jongmin, Seoul 06603 (KR)
(74) Representative: Jung, Minkyu
(86) International application number: PCT/KR2023/020306
(87) International publication number: WO 2025/127165

(57) **Abstract**

A lighting apparatus and a control system for a lighting apparatus are disclosed. A lighting apparatus according to an embodiment of the present disclosure may include a lighting-side Bluetooth module configured to communicate based on a Bluetooth Low Energy protocol; a lighting unit including a semiconductor light emitting device; a sensor unit configured to detect a designated light; a lighting-side memory configured to store unique identification information; and a lighting-side control unit.

## Description

### TECHNICAL FIELD

The present invention relates to a lighting apparatus and a control system for the lighting apparatuses.

### BACKGROUND ART

With the development of sensor network technology, research and development of smart lighting technology that can control a lighting apparatus by attaching a sensor to the lighting apparatus is being actively conducted.

Smart lighting technology may increase the convenience of an operator when operating a plurality of lighting apparatuses. However, even in the case of smart lighting, an installation worker must directly set up each individual lighting apparatus during construction, and if an error occurs in the setup work for a plurality of lighting apparatuses, there is a problem of having to re-install or change the setting information.

Due to the nature of a lighting apparatus, the lighting apparatus is installed in a high place on a ceiling, so there is a problem that it is not easy for a worker to access and work on the installed lighting apparatus after the lighting apparatus is installed on the ceiling.

The matters described in this background art section are for understanding the background of the disclosure, and it cannot be asserted that this is a prior art already known to a person of ordinary skill in the art to which this technology belongs.

### DESCRIPTION OF EMBODIMENTS

### TECHINCAL PROBLEM

The present disclosure intends to provide a lighting apparatus and a control system thereof, which allow a user's terminal to easily check the unique identification information of the lighting apparatus.

Furthermore, the present disclosure intends to provide a lighting apparatus and a control system thereof, which can easily reset a lighting apparatus installed on a ceiling when necessary, even without directly accessing the lighting apparatus installed on the high ceiling.

### SOLUTION TO PROBLEM

According to an embodiment of the present disclosure, a lighting apparatus is disclosed, comprising: a lighting-side Bluetooth module that communicates based on a Bluetooth Low Energy protocol; a lighting unit including a semiconductor light emitting device; a sensor unit that detects a designated light; a lighting-side memory that stores unique identification information; and a lighting-side control unit, wherein, when the sensor unit detects a first light designated in response to an individual registration command, the lighting-side control unit turns on the lighting-side Bluetooth module and controls the lighting-side Bluetooth module to broadcast the unique identification information.

According to an embodiment, when the sensor unit detects the first light, the lighting-side control unit may control the lighting unit to emit a designated work light to indicate that the first light has been detected.

According to an embodiment, when the sensor unit re-detects the first light after a designated time from the point when the first light was detected, the lighting-side control unit may turn off the lighting-side Bluetooth module.

According to an embodiment, when the sensor unit detects a designated second light in response to a reset command, one or more of the lighting-side Bluetooth module, the lighting unit, the sensor unit, the lighting-side memory, and the lighting-side control unit may be reset.

According to another embodiment of the present disclosure, in a control system for a lighting apparatus including a plurality of lighting apparatuses that form a Bluetooth mesh network and a terminal, the lighting apparatus includes: a lighting-side Bluetooth module that communicates based on a Bluetooth Low Energy protocol; a lighting unit including a semiconductor light emitting device; a sensor unit that detects a designated light; a lighting-side memory that stores unique identification information; and a lighting-side control unit, and the terminal includes: a terminal-side Bluetooth module that communicates with the lighting-side Bluetooth module based on the Bluetooth Low Energy protocol; a terminal-side control unit; and a terminal-side memory, wherein, when a sensor unit of a first lighting apparatus among the plurality of lighting apparatuses detects a first light corresponding to an individual registration command, a lighting-side control unit of the first lighting apparatus turns on a lighting-side Bluetooth module of the first lighting apparatus and controls the lighting-side Bluetooth module of the first lighting apparatus to broadcast unique identification information of the first lighting apparatus, and a control system for a lighting apparatus is disclosed, wherein a terminal-side control unit of the terminal receives the broadcasted unique identification information of the first lighting apparatus through a terminal-side Bluetooth module of the terminal.

According to an embodiment, the terminal may map and store the unique identification information of the first lighting apparatus to layout information of the lighting apparatus according to a user's input, and the layout information of the lighting apparatus may be information generated at the terminal according to the user's input, or information extracted from data previously stored in the terminal-side memory according to the user's input.

According to an embodiment, when the sensor unit of the first lighting apparatus re-detects the first light after a designated time from the point when the first light was detected, the lighting-side control unit of the first lighting apparatus may turn off the lighting-side Bluetooth module of the first lighting apparatus.

According to an embodiment, when the sensor unit of the first lighting apparatus detects a designated second light in response to a reset command, one or more of the lighting-side Bluetooth module, the lighting unit, the sensor unit, the lighting-side memory, and the lighting-side control unit provided in the first lighting apparatus may be reset.

According to yet another embodiment of the present disclosure, in a control method for a lighting apparatus including a plurality of lighting apparatuses that form a Bluetooth mesh network and a terminal, a control method for a lighting apparatus is disclosed, comprising: (a) maintaining a state in which the plurality of lighting apparatuses can detect a predetermined light through a sensor unit provided therein; (b) when a first lighting apparatus among the plurality of lighting apparatuses detects a designated first light corresponding to an individual registration command, broadcasting unique identification information of the first lighting apparatus; and (c) the terminal receiving and displaying the broadcasted unique identification information of the first lighting apparatus.

According to an embodiment, the step (c) may include a step of the terminal mapping and storing the unique identification information of the first lighting apparatus to layout information of the lighting apparatus, wherein the layout information of the lighting apparatus may be information generated at the terminal according to a user's input, or information extracted from data previously stored in the terminal-side memory according to the user's input.

According to an embodiment, the step (b) may include: (b1) when the first lighting apparatus detects the first light, turning on a lighting-side Bluetooth module provided in the first lighting apparatus; and after the step (b1), when the first lighting apparatus re-detects the first light after a designated time from the point when the first light was detected, turning off the lighting-side Bluetooth module provided in the first lighting apparatus.

According to an embodiment, after the step (a), the method may further include a step where, when a second lighting apparatus among the plurality of lighting apparatuses detects a designated second light corresponding to a reset command, the second lighting apparatus is reset.

### ADVANTAGEOUS EFFECTS OF DISCLOSURE

According to an embodiment of the present disclosure, the lighting apparatus and the control system thereof may allow a user's terminal to easily check the unique identification information of the lighting apparatus.

Furthermore, it is possible to easily reset a lighting apparatus installed on a ceiling when necessary, even without directly accessing the lighting apparatus installed on the high ceiling.

### BRIEF DESCRIPTION OF DRAWINGS

FIG. 1 is a layout diagram of a plurality of lighting apparatuses according to an embodiment of the present disclosure.
FIG. 2 is a diagram illustrating an internal configuration of a terminal and a lighting apparatus according to an embodiment of the present disclosure.
FIG. 3 is a flowchart illustrating a control method for a plurality of lighting apparatuses according to an embodiment of the present disclosure.
FIG. 4 is an example of a UI (User Interface) displayed to a user by a terminal according to an embodiment of the present disclosure.
FIG. 5 is a flowchart illustrating a control method for a plurality of lighting apparatuses according to another embodiment of the present disclosure.

### BEST MODE

The present disclosure may undergo various modifications and have several embodiments, and specific embodiments will be illustrated in the drawings and described in detail in the detailed description. However, this is not intended to limit the present disclosure to a specific embodiment, and it should be understood to include all modifications, equivalents, or substitutes included in the spirit and technical scope of the present disclosure.

In describing the present disclosure, if it is determined that a detailed description of a related known technology may unnecessarily obscure the gist of the present disclosure, the detailed description thereof will be omitted. In addition, numbers (e.g., 1st, 2nd, etc.) used in the description process of this specification are merely identification symbols for distinguishing one component from another.

In addition, throughout the specification, when a component is referred to as being "connected" or "accessed" to another component, it may be directly connected or accessed to the other component, but it should be understood that another component may be interposed therebetween, unless there is a specific statement to the contrary.

In addition, throughout the specification, when a certain part is stated to "include" a certain component, it means that it may further include other components, rather than excluding other components, unless there is a specific statement to the contrary. In addition, terms such as "unit" and "module" described in the specification mean a unit that processes at least one function or operation, and this may be implemented as a combination of one or more hardware or software, or hardware and software.

Hereinafter, embodiments of the present disclosure will be described in detail with reference to the accompanying drawings.

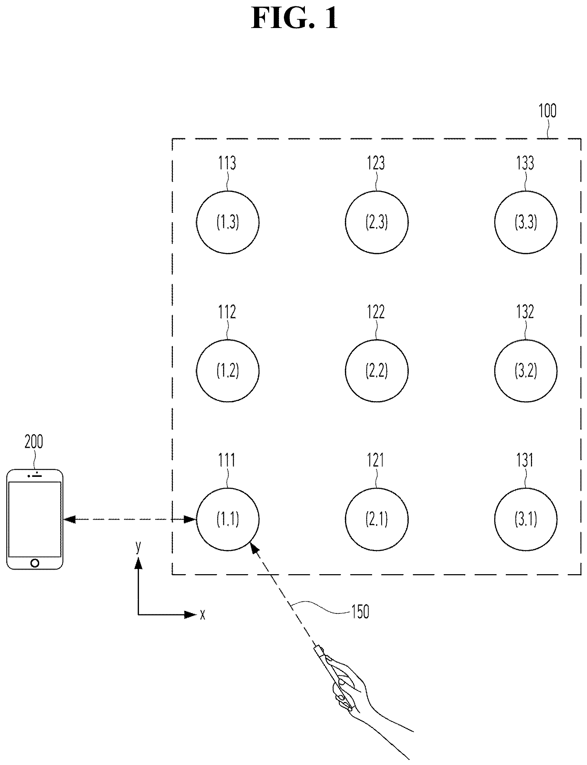

FIG. 1 is a layout diagram of a plurality of lighting apparatuses according to an embodiment of the present disclosure.

The lighting apparatus 100 according to an embodiment of the present disclosure may be installed in various numbers and various layouts according to a user's request and/or the characteristics of the structure in which it is installed.

Hereinafter, for the convenience of understanding and describing the disclosure, it will be described that nine lighting apparatuses 100 are arranged in a 3x3 form, but the technical idea of the present disclosure is not limited thereto. In addition, each position where the nine lighting apparatuses 100 illustrated in FIG. 1 are installed is referred to using (x-coordinate, y-coordinate) for convenience of description.

The lighting apparatus 100 according to an embodiment of the present disclosure may form a Bluetooth Mesh Network. A mesh network is implemented as a wireless communication network in a mesh form with a plurality of mesh nodes, and each mesh node communicates with other mesh nodes to form a wireless communication network. Therefore, information within the network can be routed very flexibly through the mesh nodes, and it is possible to freely add new mesh nodes. In this embodiment, each lighting apparatus 100 may perform the role of a mesh node. Since the Bluetooth mesh network is a technology known at the time of filing of the present disclosure, a detailed description thereof will be omitted in this specification, except for parts directly related to the present disclosure.

Although not shown in FIG. 1, the plurality of lighting apparatuses 100 forming the Bluetooth mesh network may be connected to a gateway (not shown) and a Bluetooth mesh network, and the gateway (not shown) may be connected wirelessly or by wire to other related devices (e.g., wall pad, server, etc.) (not shown) depending on the environment in which the present disclosure is applied.

In general, after a user installs a plurality of lighting apparatuses 100 on a ceiling, the user organizes the unique identification information of each of the plurality of lighting apparatuses 100 into a certain database, and builds a control system for the lighting apparatuses 100 based on the database. Here, the number of lighting apparatuses 100 may range from several to several hundred depending on the case. However, if the unique identification information of any one (or a plurality) of the plurality of lighting apparatuses 100 is incorrectly entered into the database, a problem arises that the corresponding lighting apparatus cannot be controlled correctly.

For example, let's assume that the first lighting apparatus 111 at the (1,1) position in FIG. 1 is not controlled correctly.

Due to the characteristic of being installed on a high ceiling, it is not easy for a user to directly access the first lighting apparatus 100. In addition, according to the prior art, in the case of FIG. 1, there is a problem that it isnot easy to distinguish between the correctly entered unique identification information and the incorrectly entered unique identification information in the database containing the identification information of the nine lighting apparatuses 100.

In addition, according to the prior art, in the database containing the unique identification information of the nine lighting apparatuses, there is a problem that it is also not easy to intuitively recognize the unique identification information of the first lighting apparatus 111.

The lighting apparatus 100 according to an embodiment of the present disclosure has an advantage that, when it receives a designated light, it broadcasts the unique identification information, so that it can be easily checked on the user's terminal 200.

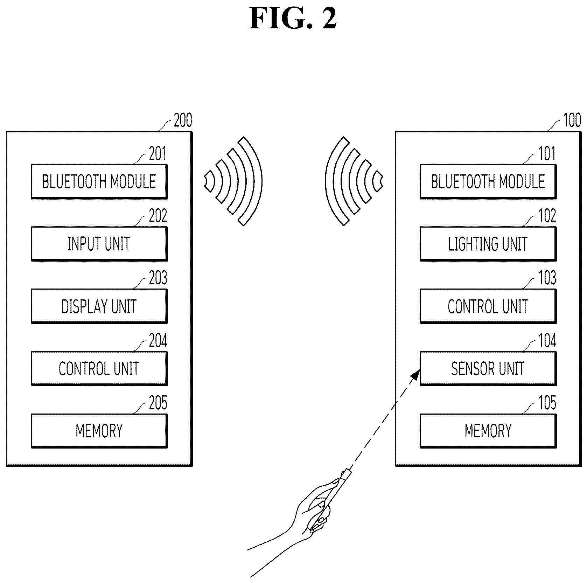

Hereinafter, a description will be given with reference to FIG. 2.

FIG. 2 is a diagram illustrating an internal configuration of a terminal and a lighting apparatus according to an embodiment of the present disclosure.

Referring to FIG. 2, the lighting apparatus 100 according to an embodiment of the present disclosure may include a lighting-side Bluetooth module 101, a lighting unit 102, a lighting-side control unit 103, a sensor unit 104, and a lighting-side memory 105.

The lighting-side Bluetooth module 101 may transmit and receive Bluetooth wireless signals based on a Bluetooth Low Energy (hereinafter referred to as 'BLE') protocol. In addition, the lighting-side Bluetooth module 101 may configure a mesh network in which each Bluetooth moduleperforms host and network routing functions based on the BLE protocol.

The lighting unit 102 may be any light-emitting element that emits light when an electrical signal is applied, and for example, a light-emitting diode (LED) may be used. In addition, the lighting unit 102 may change and emit the color, saturation, brightness, or color temperature of the light according to the control of the lighting-side control unit 103 to be described later.

The sensor unit 104 may detect a designated light. More specifically, the sensor unit 104 maintains a state capable of detecting the designated light, and through this, can detect the designated light at any time.

FIG. 1 illustrates a laser pointer 150 as an example of a device that emits a designated light, but any device capable of emitting a designated light can be applied to the present disclosure.

Here, the designated light may include one or more of a designated first light corresponding to an individual registration command and a designated second light corresponding to a reset command.

Here, the designated light is not limited to visible light, and may include all electromagnetic waves (for example, radio waves, infrared rays, visible light, ultraviolet rays, X-rays, etc.) that can be used according to the technology known at the time of filing of the present disclosure. And even with the same wavelength, they can be identified as the first light and the second light by a combination of short electromagnetic waves and long electromagnetic waves, like Morse code. Hereinafter, for convenience of understanding and description of the present disclosure, the first light and the second light will be described assuming they are different lights emitted from the laser pointer 150.

The lighting-side control unit 103 may configure a mesh network including a plurality of lighting apparatuses 100 using the lighting-side Bluetooth module 101. In this case, since the lighting apparatus 100 configures a mesh network, the network can be flexibly configured even when a new lighting apparatus 100 is added or some of the existing lighting apparatuses 100 are removed.

If the sensor unit 104 detects the designated first light in response to an individual registration command, the lighting-side control unit 103 may turn on the lighting-side Bluetooth module 101 and control the lighting-side Bluetooth module 101 to broadcast the unique identification information of the lighting apparatus 100. At this time, the lighting-side control unit 103 may turn on a provided separate display indicator (not shown) to allow a user to recognize that the sensor unit 104 has accurately detected the first light. The indicator (not shown) may be formed inside or outside the sensor unit 104.

Here, the unique identification information may be a device ID, such as an individual serial number assigned to the lighting apparatus 100 at the time of manufacture, or information generated according to a designated method using the device ID. In addition, the unique identification information may be designated in various ways in response to the regulations of the BLE protocol.

If the sensor unit 104 detects the designated second light in response to a reset command, the lighting-side control unit 103 may reset the lighting apparatus 100, or may reset one or more of the lighting-side Bluetooth module 101, the lighting unit 102, the lighting-side control unit 103, the sensor unit 104, and the lighting-side memory 105 included in the lighting apparatus 100.

Here, the reset may be a factory reset, or a reset that returns to the settings of a specific point in time designated according to a user's setting.

In addition, the sensor unit 104 may be configured to include a separate indicator for visually and/or audibly notifying the user that the designated light has been recognized.

The lighting-side memory 105 may store a program for the processing and control of the lighting-side control unit 103, and may perform a function for temporary storage of input or output data.

In FIG. 2, the lighting-side memory 105 is shown as a separate component from the configuration of the sensor unit 104, the lighting-side control unit 103, etc., but the lighting-side memory 105 may be formed inside the sensor unit 104 and/or the lighting-side control unit 103. Therefore, the location of the lighting-side memory 105 is irrelevant to the scope of rights of the present disclosure.

Referring to FIG. 2, the terminal 200 according to an embodiment of the present disclosure may include one or more of a terminal-side Bluetooth module 201, an input unit 202, a display unit 203, a terminal-side control unit 204, and a terminal-side memory 205.

The terminal 200 according to an embodiment of the present disclosure is portable by a user, such as a smartphone, a mobile phone, a laptop, or a tablet, and any IT device capable of communication based on the BLE protocol is applicable. Hereinafter, for the convenience of understanding and describing the present disclosure, the terminal 200 will be described assuming it is a smartphone 200. In this case, the internal configuration of the terminal 200 illustrated in FIG. 2 may be implemented using the internal configuration provided in the smartphone 200.

The terminal-side Bluetooth module 201 may transmit and receive Bluetooth wireless signals based on the BLE protocol. For example, the terminal-side Bluetooth module 201 may transmit a predetermined signal to the lighting-side Bluetooth module 101 of the lighting apparatus 100 based on the BLE protocol, and may also receive information transmitted from the lighting-side Bluetooth module 101 of the lighting apparatus 100.

The input unit 202 generates key input data that a user inputs to control the operation of the terminal 200. The input unit 202 may be configured with various input devices such as a key pad, a dome switch, a touch pad, a jog wheel, a jog switch, and a finger mouse. In particular, the touch pad may form a mutual layer structure with the display unit 203, which will be described later, to constitute a touch screen.

The display unit 203 may output information processed in the terminal 200 as visual information that the user can recognize. When the terminal 200 is a smartphone, it may display a UI (User Interface) or GUI (Graphic User Interface) related to the smartphone. Meanwhile, as described above, when the display unit 203 and the input unit 202 constitute a touch screen, the display unit 203 may also serve as the input unit 202. When the display unit 203 is configured as a touch screen, it may include a touch screen panel, a touch screen panel controller, and the like.

The terminal-side memory 205 may store a program for the processing and control of the terminal-side control unit 204 to be described later, and input or output data may be temporarily stored.

The terminal-side control unit 204 may execute a program that controls the connection with the lighting apparatus 100.

The terminal-side control unit 204 may receive the unique identification information of the lighting apparatus 100 through the terminal-side Bluetooth module 201, and may display the received unique identification information to the user through the display unit 203.

In addition, the terminal-side control unit 204 may map and store the received unique identification information to layout information of the lighting apparatus according to a user's input. And, the terminal-side control unit 204 may assign other settings or properties to the first lighting apparatus 111 connected to the terminal 200 according to the user's input and map and store them in the layout information of the lighting apparatus.

So far, the internal configurations of the lighting apparatus 100 and the terminal 200 have been described with reference to FIG. 2. However, it is intended to be clarified that the internal configurations of the lighting apparatus 100 and the terminal 200 described in FIG. 2 are merely one example divided by the main function that each component is in charge of. That is, the internal configurations of the lighting apparatus 100 and the terminal 200 illustrated in FIG. 2 may be provided by combining two or more components into one component, or by dividing one component into two or more components by more detailed functions. In addition, it will be apparent to those skilled in the art in light of the technical idea of the present disclosure that each of the above-described components may additionally perform some or all of the functions handled by other components, in addition to its own main function.

Therefore, in describing the control method of the lighting apparatus 100 below, it may be understood that the functions performed by the detailed configurations of the terminal 200 and the lighting apparatus 100 are performed by the terminal 200 and the lighting apparatus 100.

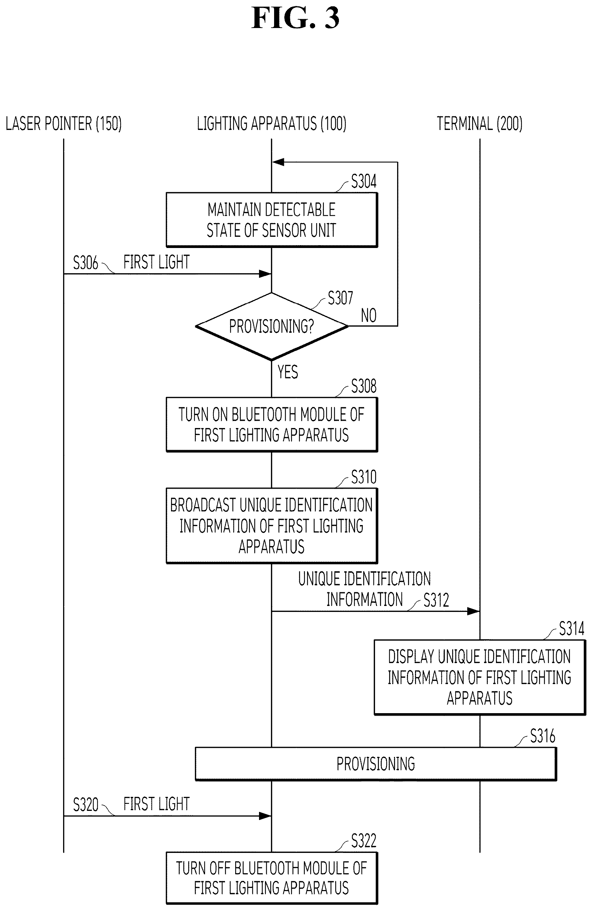

FIG. 3 is a flowchart illustrating a control method for a plurality of lighting apparatuses according to an embodiment of the present disclosure.

The lighting apparatuses 100 are installed on a ceiling, for example, as illustrated in FIG. 1, nine lighting apparatuses 100 are installed, and may constitute a Bluetooth mesh network based on the BLE protocol.

And, the plurality of lighting apparatuses 100 may be connected to a gateway (not shown) based on the BLE protocol, and the gateway (not shown) may be connected wirelessly or by wire to other related devices (for example, wall pad, server, etc.).

As indicated in step S304, the sensor unit 104 included in each of the plurality of lighting apparatuses 100 installed on the ceiling may maintain a state in which it can detect a designated light.

Next, in step S306, the user may shine a designated first light corresponding to an individual registration command on a certain lighting apparatus that needs to be checked (for example, the first lighting apparatus 111 located at (1,1) in FIG. 1). For example, the user may shine the first light on the first lighting apparatus 111 using the laser pointer 150.

Next, in step S308, the first lighting apparatus 111 turns on the lighting-side Bluetooth module 101 of the first lighting apparatus 111, and in step S310, controls the turned-on lighting-side Bluetooth module 101 to broadcast the unique identification information of the first lighting apparatus 111 based on the BLE protocol.

Since the user's terminal 200 can receive data based on the BLE protocol, in step S312, it receives the unique identification information of the first lighting apparatus 111 broadcast from the first lighting apparatus 111, and in step S314, displays it to the user. Therefore, according to an embodiment of the present disclosure, for the required first lighting apparatus 111, the user shines a designated first light (for example, a certain light output from the laser pointer 150), and has the advantage of being able to easily check the unique identification information of the first lighting apparatus 111 on the user's terminal 200.

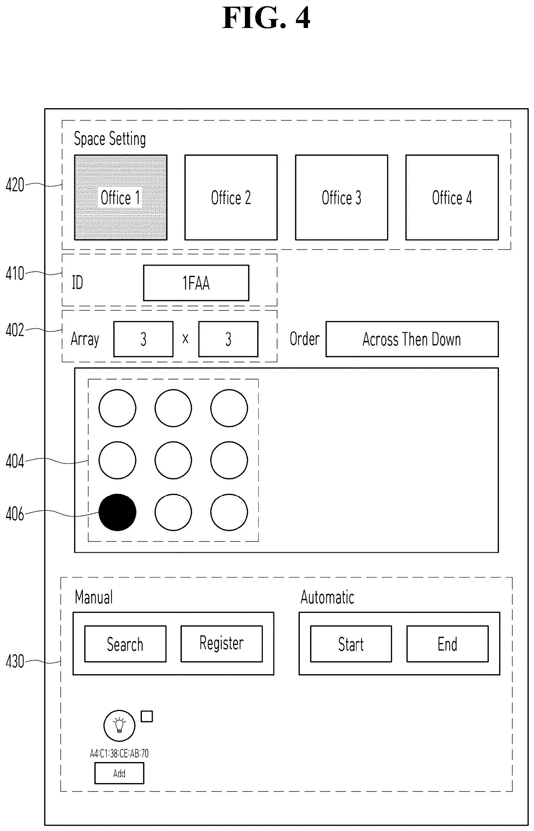

Next, in step S316, the terminal 200 and/or the first lighting apparatus 111 may perform a provisioning operation. The provisioning operation may mean a procedure for authenticating an unauthenticated device and sharing basic information (for example, Unicast Address, various keys, etc.) for the first lighting apparatus 111 to participate in the Bluetooth mesh network. Since the provisioning operation of the terminal 200 and/or the first lighting apparatus 111 is the same as or similar to already disclosed operations, a detailed description thereof will be omitted. In step S316, the user may map and store the unique identification information of the first lighting apparatus 111 to the layout information of the lighting apparatus through a pre-provided program or UI (User Interface) on the terminal 200 (the UI screen layout and content illustrated in FIG. 4 to be described later are for reference only and its configuration can be changed).

Here, the layout information of the lighting apparatus may be generated at the terminal 200 according to the user's input, or may be information extracted from data previously stored in the terminal-side memory 205 according to the user's input.

FIG. 4 is an example of a UI displayed to a user by the terminal 200 according to an embodiment of the present disclosure.

For example, as illustrated in FIG. 1, when the lighting apparatuses 100 installed on the ceiling are regularly arranged, the terminal 200 may be provided with a means 402 for inputting information about the regular arrangement, and may generate and display the layout information 404 of the lighting apparatus according to the user's input. In this case, by designating the first lighting apparatus 406 in the generated layout information 404 of the lighting apparatus, the user may map (i.e., designate the first lighting apparatus 111, 406 in the layout information 404 of the lighting apparatus) and store the received unique identification information 410 of the first lighting apparatus in the generated layout information 404 of the lighting apparatus.

Therefore, according to an embodiment of the present disclosure, the user has the advantage of being able to intuitively and quickly know where the first lighting apparatus 101, 406 is located in the work site by referring to the layout information 404 of the lighting apparatus.

However, the UI for assigning an ID shown in FIG. 4 is only an example, and the scope of rights of the present disclosure is not limited by this.

As another example, the terminal 200 may display image or drawing information about a plurality of lighting apparatuses 100 installed on the ceiling to the user as layout information (not shown) of the lighting apparatus, and may map and store the received unique identification information of the lighting apparatus (for example, the first lighting apparatus 111) closest to the location input by the user.

In addition, the terminal 200 may provide a means 420 for grouping the first lighting apparatus 111 according to the user's input, and may also provide a means 430 for searching and registering a lighting apparatus to be connected.

Referring back to FIG. 3, in step S320, when the first lighting apparatus 111 re-detects the first light, that is, when the first light is re-detected after a designated time from the point when the first light was detected in step S306, in step S322, the first lighting apparatus 111 may turn off the lighting-side Bluetooth module 101 provided in the first lighting apparatus 111.

So far, with reference to FIG. 3, a case has been described assuming that the user wants to check the unique identification information for the first lighting apparatus 111 among the plurality of lighting apparatuses 100 according to an embodiment of the present disclosure. The steps illustrated in FIG. 3 are merely one embodiment for the convenience of understanding and describing the present disclosure, and can be variously modified and changed.

For example, for the first lighting apparatus 111, step S316 may be omitted and the process may proceed to step S322, and then for another lighting apparatus that needs to be checked, the process may proceed from step S304.

For example, although not shown in FIG. 3, after step S306, the lighting apparatus 100, in order to visually indicate to the user that it has received the first light, may control the lighting unit 102 by the lighting-side control unit 103 provided in the first lighting apparatus 111 to emit a pre-designated work light (for example, a designated color or designated blinking, etc.). In this case, the user recognizes the work light output by the first lighting apparatus 111 and can recognize that the first lighting apparatus 111 has successfully detected the first light. In this case, in step S320, the lighting-side control unit 103 may turn off the lighting unit 102 that emits the work light designated by the lighting-side control unit 103.

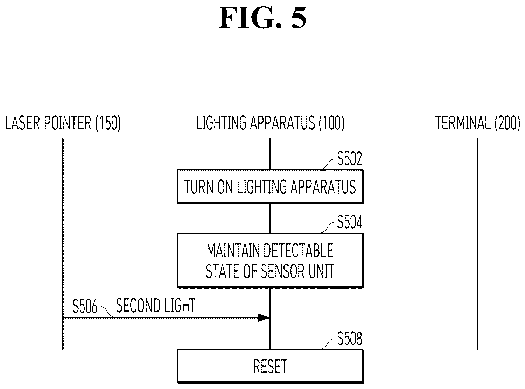

FIG. 5 is a flowchart illustrating a control method for a plurality of lighting apparatuses according to another embodiment of the present disclosure.

Referring to FIG. 5, up to step S504 is the same as what was described in step S304 of FIG. 3, so a duplicate description will be omitted.

In step S506, for a certain lighting apparatus that needs to be reset (for example, the second lighting apparatus 121 located at (1,2) in FIG. 1), the user may shine a designated second light corresponding to a reset command. For example, the user may shine the second light provided in the laser pointer 150 on the second lighting apparatus 121.

In this case, in step S508, the lighting-side control unit 130 of the second lighting apparatus 121 may reset the second lighting apparatus 121, or may reset one or more of the lighting-side Bluetooth module 101, the lighting unit 102, the sensor unit 104, the lighting-side memory 105, and the lighting-side control unit 103 included in the second lighting apparatus 100.

As described above, the reset described in this specification may be a factory reset, or a reset that returns to the settings of a specific point in time designated according to a user's setting.

In the prior art, when a user wants to reset the second lighting apparatus 121, the user had to dangerously access the second lighting apparatus 121 installed on a high ceiling using a ladder or the like, and in some cases, there was the trouble of having to detach the installed second lighting apparatus 121 from the ceiling to pressthe reset button.

However, according to an embodiment of the present disclosure, there is an advantage that the user can easily perform a reset by shining a designated second light corresponding to a reset command on the second lighting apparatus 121 that needs to be reset.

Although not shown in FIG. 5, it will be apparent to those skilled in the art in light of the technical idea of the present disclosure that after the second lighting apparatus 121 is reset, steps S308 to S314 of FIG. 3 may be performed so that the unique identification information of the second lighting apparatus 121 can be displayed on the user's terminal 200. And, in this case, step S316 of FIG. 3 may be additionally performed, so that the unique identification information of the second lighting apparatus 121 is mapped to the layout information 404 of the lighting apparatus and can be stored in the terminal 200.

Although the embodiments of the present disclosure have been described with reference to the above, it will be easily understood by those of ordinary skill in the art to which this technology belongs that the present disclosure can be variously modified and changed within a scope that does not depart from the spirit and scope of the present disclosure described in the following claims.

## Claims

1. A lighting apparatus, comprising:
a lighting-side Bluetooth module configured to communicate based on a Bluetooth Low Energy protocol;
a lighting unit including a semiconductor light emitting device;
a sensor unit configured to detect a designated light;
a lighting-side memory configured to store unique identification information; and
a lighting-side control unit;
wherein, when the sensor unit detects a designated first light corresponding to an individual registration command,
the lighting-side control unit turns on the lighting-side Bluetooth module, and
controls the lighting-side Bluetooth module to broadcast the unique identification information.

2. The lighting apparatus of claim 1, wherein,
when the sensor unit detects the first light, the lighting-side control unit controls the lighting unit to emit a designated work light to indicate that the first light has been detected.

3. The lighting apparatus of claim 1, wherein,
when the sensor unit re-detects the first light after a designated time from a point when the first light was detected, the lighting-side control unit turns off the lighting-side Bluetooth module.

4. The lighting apparatus of claim 1, wherein,
when the sensor unit detects a designated second light corresponding to a reset command,
one or more of the lighting-side Bluetooth module, the lighting unit, the sensor unit, the lighting-side memory, and the lighting-side control unit is reset.

5. A control system for a lighting apparatus including a plurality of lighting apparatuses that form a Bluetooth mesh network, and a terminal,
wherein the lighting apparatus comprises:
a lighting-side Bluetooth module configured to communicate based on a Bluetooth Low Energy protocol;
a lighting unit including a semiconductor light emitting device;
a sensor unit configured to detect a designated light;
a lighting-side memory configured to store unique identification information; and
a lighting-side control unit,
the terminal comprises:
a terminal-side Bluetooth module configured to communicate with the lighting-side Bluetooth module based on a Bluetooth Low Energy protocol;
a terminal-side control unit; and
a terminal-side memory,
wherein, when a sensor unit of a first lighting apparatus among the plurality of lighting apparatuses detects a first light corresponding to an individual registration command, a lighting-side control unit of the first lighting apparatus turns on a lighting-side Bluetooth module of the first lighting apparatus and controls the Bluetooth module of the first lighting apparatus to broadcast unique identification information of the first lighting apparatus, and
the terminal-side control unit receives the broadcasted unique identification information of the first lighting apparatus through the terminal-side Bluetooth module.

6. The control system for a lighting apparatus of claim 5, wherein,
the terminal maps and stores the unique identification information of the first lighting apparatus to layout information of the lighting apparatus according to a user's input, and
the layout information of the lighting apparatus is information generated at the terminal according to the user's input, or information extracted from data previously stored in the terminal-side memory according to the user's input.

7. The control system for a lighting apparatus of claim 5, wherein,
when the sensor unit of the first lighting apparatus re-detects the first light after a designated time from a point when the first light was detected, the lighting-side control unit of the first lighting apparatus turns off the lighting-side Bluetooth module of the first lighting apparatus.

8. The control system for a lighting apparatus of claim 5, wherein,
when the sensor unit of the first lighting apparatus detects a designated second light corresponding to a reset command, one or more of the lighting-side Bluetooth module, the lighting unit, the sensor unit, the lighting-side memory, and the lighting-side control unit provided in the first lighting apparatus is reset.

9. A control method for a lighting apparatus including a plurality of lighting apparatuses that form a Bluetooth mesh network, and a terminal, the method comprising:
(a) maintaining a state in which the plurality of lighting apparatuses can detect a predetermined light through a sensor unit provided therein;
(b) when a first lighting apparatus among the plurality of lighting apparatuses detects a designated first light corresponding to an individual registration command, broadcasting unique identification information of the first lighting apparatus; and
(c) the terminal receiving and displaying the broadcasted unique identification information of the first lighting apparatus.

10. The control method for a lighting apparatus of claim 9, wherein,
the step (c) comprises:
the terminal mapping and storing the unique identification information of the first lighting apparatus to layout information of the lighting apparatus, and
wherein the layout information of the lighting apparatus is information generated at the terminal according to a user's input, or information extracted from data previously stored in the terminal-side memory according to the user's input.

11. The control method for a lighting apparatus of claim 9, wherein the step (b) comprises:
(b1) when the first lighting apparatus detects the first light, turning on a lighting-side Bluetooth module provided in the first lighting apparatus; and
after the step (b1),
when the first lighting apparatus re-detects the first light after a designated time from a point when the first light was detected, turning off the lighting-side Bluetooth module provided in the first lighting apparatus.

12. The control method for a lighting apparatus of claim 9, further comprising:
after the step (a),
when a second lighting apparatus among the plurality of lighting apparatuses detects a designated second light corresponding to a reset command, resetting the second lighting apparatus.
